# EUROPEAN PATENT APPLICATION

(11) **EP 2 521 234 A1**
(43) Date of publication of application: **07.11.2012**
(21) Application number: 11305535.4
(22) Date of filing: 06.05.2011
(51) Int. Cl.: H02G 3/38, H04Q 1/06

(54) **Wall mounted plate with integrated ducts**

(71) Applicant: Tyco Electronics Raychem BVBA, 3010 Kessel-Lo (BE); ADC Europe NV, 91090 Evry-Lisses (FR)
(72) Inventor: Collart, Stéphane, 2250, Olen (BE); Schurmans, Eric, 3450, Geetbets (BE); Amoyal, William, 1000, Brussels (BE); Rodriguez, Guy-Noël, 69380, Chazay d' Azergues (FR)
(74) Representative: Joly, Jean-Jacques

(57) **Abstract**

A telecommunications wall plate (10) for mounting to the wall surface comprising a body defining a front surface (20), and a rear surface (22) spaced from the front surface; the body including two opposite sides (12, 14), a top (16), and a bottom (18); the front surface defining at least one duct (30) extending from the top to the bottom and exposed along the front surface in the space between the front surface and the rear surface. The wall plate holds telecommunications boxes (40, 160, 300). The wall plate can be integral (10) or made from separate elements (202) that interlock with each other. Input and/or output cables can be placed in the ducts. Cables extending between the telecommunications boxes can be placed in the ducts after passing through rear openings (100, 300) in the boxes aligned with the ducts.

## Description

### Field of the Invention

The present invention relates to systems and methods for mounting wall boxes and other telecommunications equipment.

### Background of the Invention

Wall boxes are known for managing telecommunications cables and connectivity equipment, including splices, splitters, wave division multiplexers and terminations. Typically the wall boxes are mounted directly to the wall. For cables running to and from the wall boxes, or cables running between wall boxes, care must be taken to organize and protect the cables. Additional brackets and protective tubing may be used. There is a need for improvements in the area.

### Section 1.01 Summary of the Invention

The present invention concerns a wall mounted plate for holding telecommunications equipment, such as wall boxes. The plate includes integrated ducts. The ducts provide passageways for cabling extending between the wall boxes. The ducts can also receive input and/or output cables.

The wall plate holds telecommunications boxes. The wall plate can be integral or made from separate elements that interlock with each other.

In one embodiment of the invention, a plurality of wall boxes are mounted to the wall plate, wherein each wall box includes a cable entry area, and cable terminations disposed within the wall box. The wall box further includes at least one rear opening for accessing the duct or ducts of the wall plate.

In one embodiment, the wall plate holds at least two wall boxes in vertical alignment.

In a further embodiment, the wall plate holds at least two wall boxes which are connected by jumper cables.

In a further embodiment, a jumper cable storage box is provided in vertical alignment with at least one wall box.

In a further embodiment, the wall plate includes a cable storage box positioned on the wall plate. Riser cables entering the storage box can be communicated to one or more wall boxes positioned on the wall plate through the ducts for connection to one or more feeder cables.

In one embodiment, the wall box includes at least one rear opening in the form of a knockout which can be removed for accessing a duct of the wall plate.

In a further embodiment, the wall plate is longer in the longitudinal direction relative to a height of each wall box mounted thereon.

In another embodiment, the wall plate is assembled from separate wall plate elements positioned in vertical alignment to align the one or more ducts associated with each wall plate element.

In one embodiment, each wall plate is generally the same height as the wall box or cable storage box mounted thereon.

In one embodiment, the wall plate includes projecting flanges for receipt of fasteners for mounting the wall plate to the wall.

In one embodiment, the wall plate is made from separate wall plate elements which include an interface arrangement for aligning the wall plates in vertical alignment.

In one embodiment, an interface arrangement between the wall plates in the vertical direction includes a pin and hole.

In a further embodiment, an interface arrangement between the wall plates in the vertical direction includes two holes for receipt of a locking pin for positioning and holding the wall plates in vertical alignment.

In one embodiment, the wall plate is the same width as the wall box or boxes mounted to the wall plate.

A single wall box can be utilized to interconnect a riser cable and a feeder cable which are provided to wall box.

Additional wall boxes can be cross-connected with jumper cables as desired. The additional wall boxes can be used to interconnect additional riser cables to additional feeder cables.

Each wall box can also be used to store unused cables.

Cables passing between wall boxes can be positioned in the ducts during initial system layout, or as additional wall boxes are added. Riser cables can also be positioned in the ducts for entry into a wall box, or a cable storage box. Additional wall boxes can be added to add feeder cables, such as for additional operators adding service to the system.

In some embodiments, the wall boxes include openings or removable top and/or bottom panels to allow for cable passage, such as for jumper cables.

The present invention also concerns a method of using a wall plate including at least one duct. A wall box is mounted to the wall plate. A riser cable is routed to the wall box. The wall plate with the wall box and the riser cable is mounted to a wall.

The wall plate can be larger than the wall box or boxes initially installed, and the method further comprises adding an additional wall box or jumper storage box to the wall plate.

A further method relates to adding a second wall plate and a wall box mounted to the second wall plate in vertical alignment with the initially installed wall plate.

The wall plate can be made in separate wall plate elements that are pre-assembled together initially and mounted together as a single unit to the wall.

The various methods of the present invention allow the riser cables to be pre-installed in the wall boxes and/or storage boxes mounted to the wall plate or plates initially installed on the wall. The splices, splitters, and jumper cables can be pre-assembled before installation of the wall plate or plates to the wall.

The various methods of the present invention allow riser cables to be added to the wall boxes and/or storage boxes after installation of the wall plate or plates with the wall boxes mounted thereto.

### Brief Description of the Figures

FIG. 1 is a perspective view of a wall plate in accordance with a first embodiment of the invention;
FIG. 2 is further perspective view of the wall plate of FIG. 1;
FIG. 3 is a front view of the wall plate of FIG. 1, including four wall boxes mounted to the wall plate.
FIG. 4 is a perspective view of the wall plate and wall boxes of FIG. 3;
FIG. 5 is a further perspective view of the wall plate and wall boxes of FIG. 3;
FIG. 6 is a perspective view of one of the wall boxes with the covers in the open positions;
FIG. 7 is a rear perspective view of the wall box of FIG. 6;
FIG. 8 shows the wall plate and wall boxes of FIG. 3, with one of the wall boxes removed;
FIG. 9 shows the wall plate and the wall boxes of FIG. 8, and further including a jumper storage box;
FIG. 10 is a rear perspective view of the wall plate, wall boxes and jumper storage box of FIG. 9;
FIG. 11 is a perspective view of the jumper storage box;
FIG. 12 is a perspective view of the jumper storage box of FIG. 11, with the front doors in the open positions;
FIG. 13 is a perspective view of a second embodiment of a wall plate including separate wall plate elements;
FIG. 14 is a front view of the wall plate of FIG. 13;
FIG. 15 is a front perspective view of one of the wall plate elements of FIG. 13;
FIG. 16 is a rear perspective view of the wall plate element of FIG. 15;
FIG. 17 shows two wall plate elements being mounted together;
FIG. 18 is a rear perspective view showing three wall plate elements mounted together;
FIG. 19 is an enlarged view of the interface region between two wall plate elements;
FIG. 20 is a perspective view showing a wall box mounted to a wall plate element, with portions of the wall box removed for clarity;
FIG. 21 is an enlarged view of a portion of the wall box and the wall plate element mounted together;
FIG. 22 is a perspective view showing a wall box mounted to the second embodiment of the wall plate of FIG. 13;
FIG. 23 shows a cable storage box mounted to the first embodiment of the wall plate;
FIG. 24 shows the cable storage box mounted to the second embodiment of the wall plate;
FIG. 25 shows the second embodiment of the wall plate including one cable storage box and two wall boxes;
FIG. 26 shows the various boxes of FIG. 25, with the front covers in the open positions;
FIG. 27 is a front view of the system shown in FIG. 26;
FIG. 28 shows the second embodiment of the wall plate including the storage box, two wall boxes, and the jumper storage box;
FIG. 29 is a top view of the system of FIG. 28;
FIG. 30 is a perspective view of the storage box with the front cover in the open position;
FIG. 31 is a side view of the storage box;
FIG. 32 is a perspective view of a storage tray from the storage box FIG. 30;
FIG. 33 is a view of a cable tie down mechanism of the storage box of FIG. 30;
FIG. 34 shows a prior art fiber optic adapter;
FIG. 35 shows a prior art connector storage device;
FIG. 36 shows a schematic representation of a wall box with cables connected in an interconnect arrangement;
FIG. 37 shows a schematic representation of two wall boxes with cables connected in a cross-connect arrangement;
FIG. 38 shows a schematic representation of the storage box with three cables being stored within the storage box;
FIG. 39 shows a schematic representation of the cabling in an example arrangement with one storage box, and two wall boxes.

### Detailed Description of the Preferred Embodiments

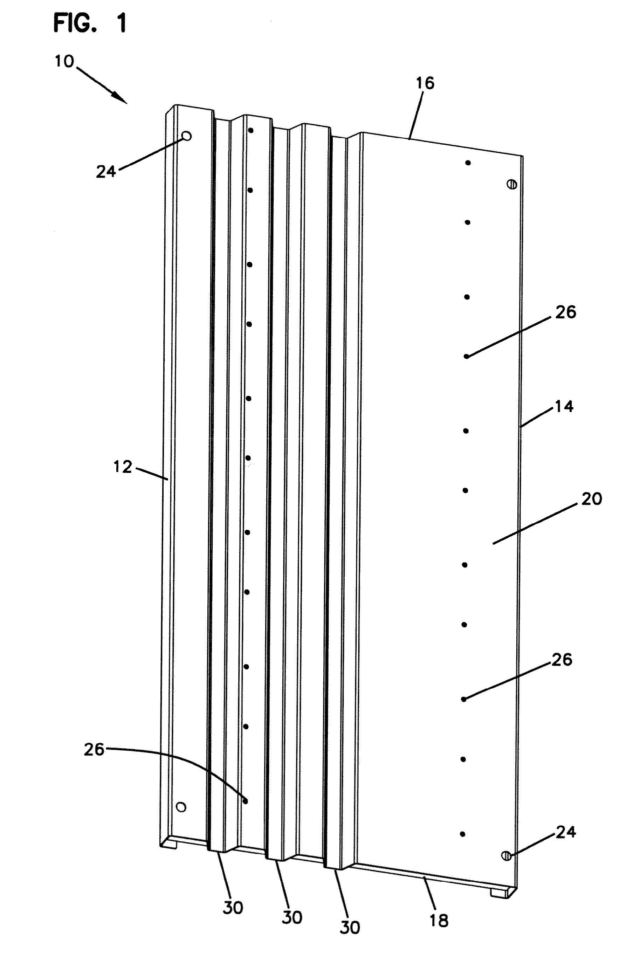

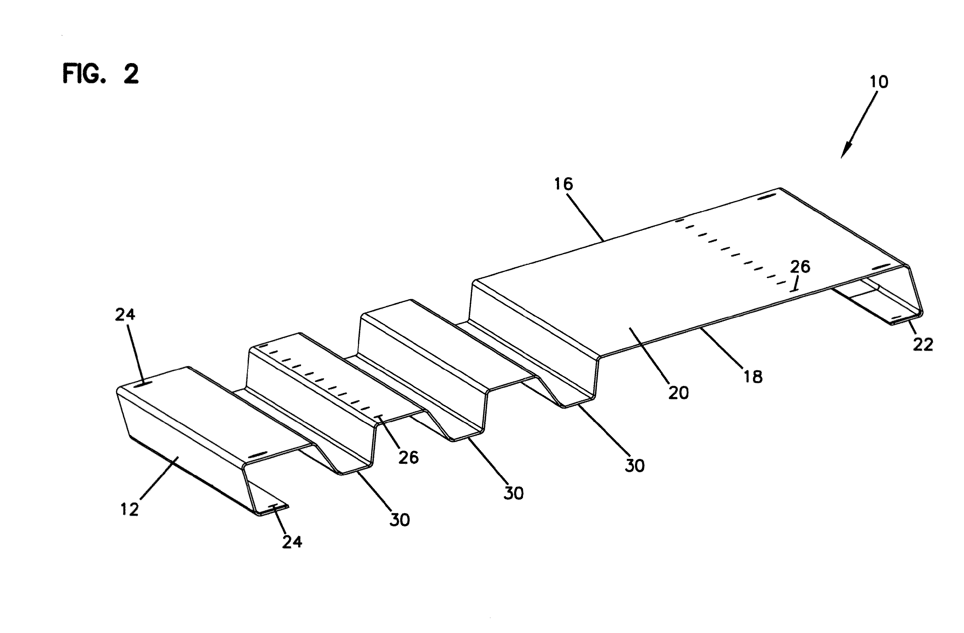

Referring now to FIGS. 1 and 2, a wall plate 10 includes first and second opposite sides 12, 14, a top 16, and a bottom 18. Wall plate 10 includes mounting holes 24 for mounting the wall plate to a wall. Further mounting holes 26 are provided for mounting the wall boxes or other equipment to the wall plate. Wall plate 10 includes at least one duct 30 extending in a longitudinal direction from top 16 to bottom 18. In the example wall plate 10, three ducts 30 are provided. Wall plate 10 includes a front surface 20, and a rear surface 22 spaced from the front surface 20. In the preferred embodiment, front surface 20 and rear surface 22 are generally planar and/or define planar surface portions. Wall plate 10 can be made of metal or plastic or other material as desired. Ducts 30 provide protective cable passages extending in the space between front surface 20 and rear surface 22. Ducts 30 extend vertically in the illustrated embodiment. Ducts 30 define recesses in wall plate 10 for the cabling.

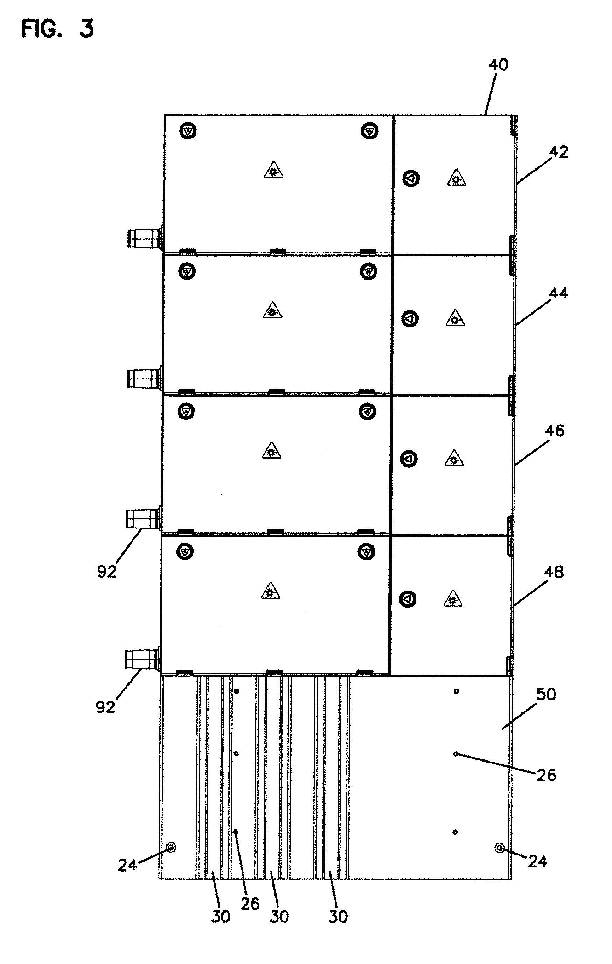

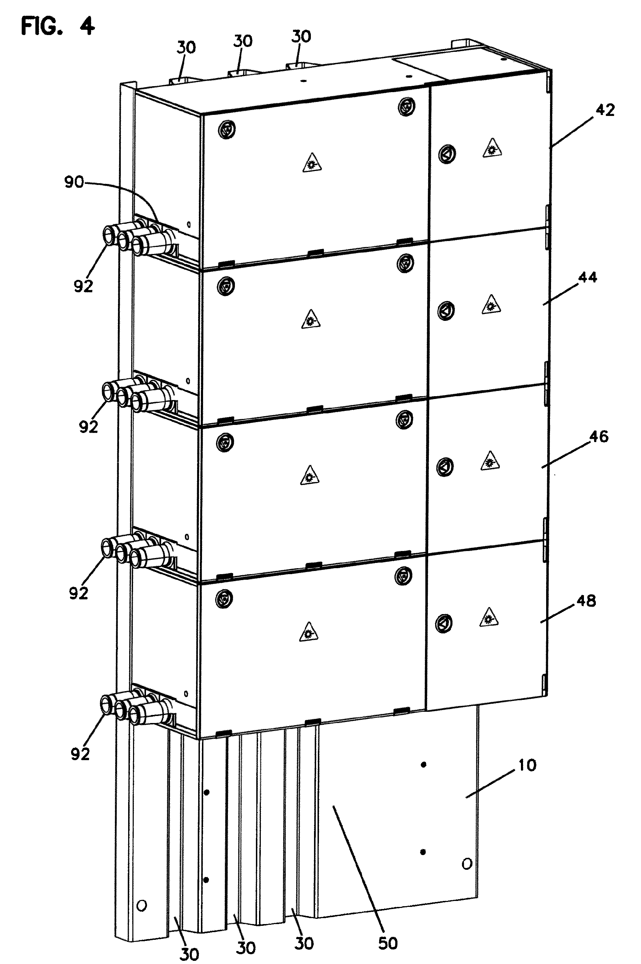

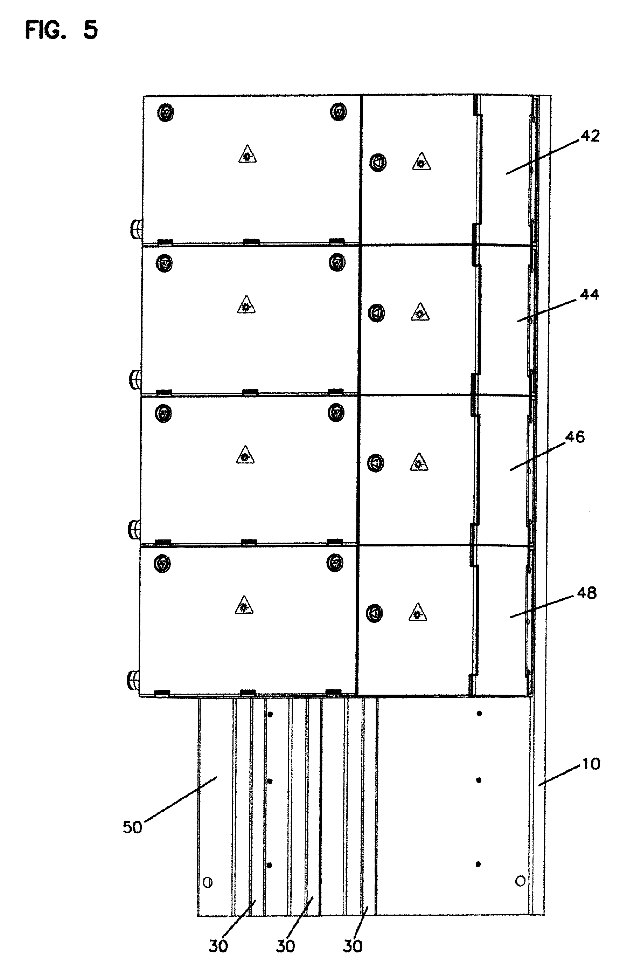

Referring now to FIGS. 3-5, a plurality of wall boxes 40 are shown mounted to wall plate 10. Front surface 20 of wall plate 10 presents a mounting surface for the wall boxes 40. As shown, a first wall box 42, a second wall box 44, a third wall box 46, and a fourth wall box 48 are shown vertically arranged. The wall boxes 42, 44, 46, 48 are shown mounted in a vertical stack on wall plate 10 to allow cable in ducts 30 to pass to and from the wall boxes. An area 50 on wall plate 10 can receive a further wall box 40, or other equipment.

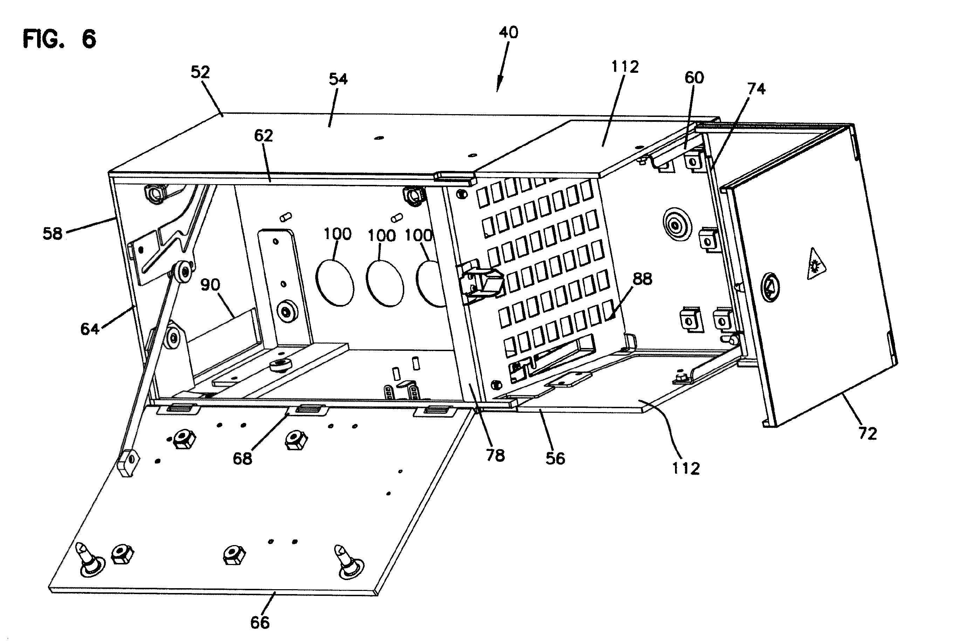

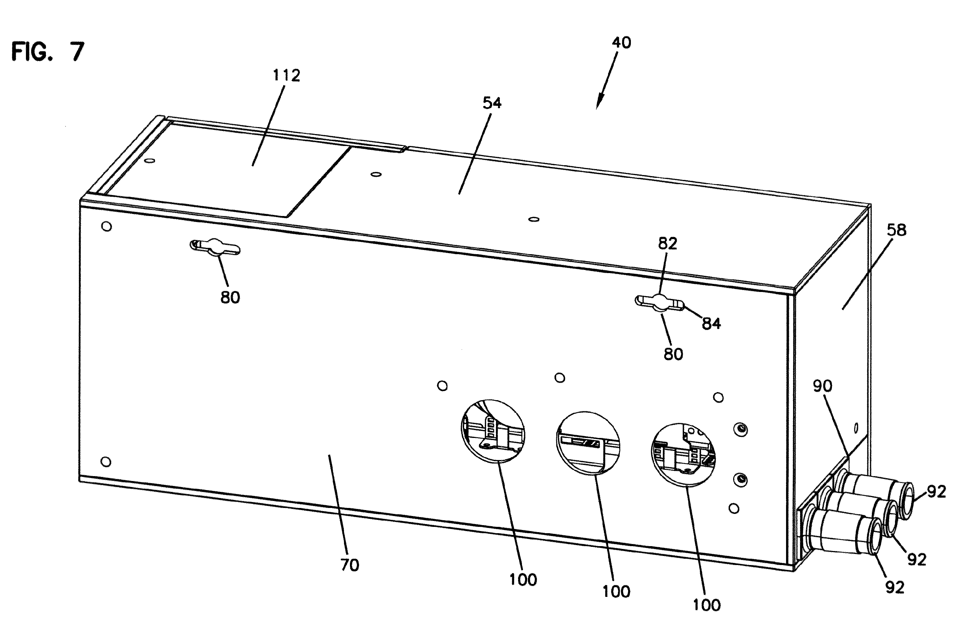

Referring to FIGS. 3-7, each wall box 40 includes a chassis 52 having a top 54, a bottom 56 and first and second sides 58, 60. A front 62 is provided with access structure for accessing an interior 64 of wall box 40. A first cover 66 pivots with a bottom hinge 68. A side cover 72 with a side hinge 74 covers a portion of front 62 and side 60. Disposed in interior 64 is a termination panel 78 for holding adapters in adapter mounting holes 88. Mounting holes 80 on wall box 40 are used to mount the wall box 40 to wall plate 10 with fasteners.

A side opening 90 in wall box 40 allows for receipt of incoming and outgoing cables. For example, feeder cables enter wall box 40, and riser or distribution cables exit wall box 40. Side ports 92 are mounted in side opening 90. Opening 90 can be simply a hole, with an optional brush or other device to prevent dust from entering the interior of wall box.

A plurality of rear holes 100 are provided in a rear 70 of chassis 52. Rear holes 100 are in alignment with ducts 30 when wall boxes 40 are mounted to wall plate 10. Rear holes can be constructed as knockout areas, such as weakened profiles to be removed when needed to pass cables into or out of wall box 40. Rear holes 100 can have a variety of shapes including round or rectangular, depending on the size and amount of cables to be passed through them. Riser cables and/or feeder cables can also be placed in ducts 30, as desired.

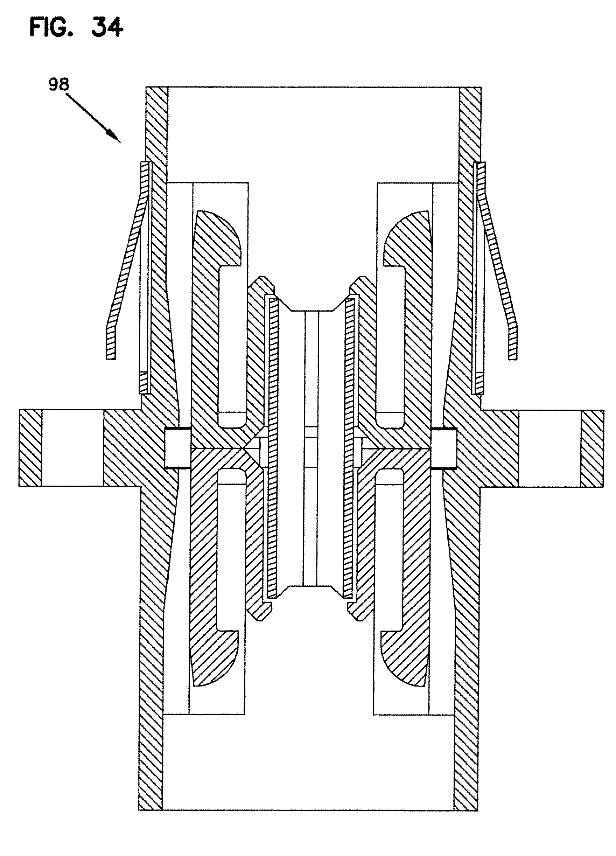

Interior 64 of each wall box 40 can hold a variety of cable management devices and structures, including splices, wave division multiplexers, fanouts, splitters, radius limiters, and cable storage areas. Termination panel 78 provides a location for holding fiber optic adapters to connect the input and output cables. An example adapter 98 is shown in FIG. 34. US Patent No. 5,317,663, the disclosure of which is incorporated by reference, also shows an example adapter 98. Termination panel 78 can be hinged or fixed. The hinged panel 78 allows for easier access to 98 and the fiber connectors. Sliding adapter packs can also be used. U.S. Patent No. 6,591,051, the disclosure of which is incorporated by reference, shows example sliding adapter packs.

Cables that need to pass between wall boxes 40 can exit through one of the rear holes 100 and enter one of the ducts 30 and pass to a different wall box 40 and enter through its respective rear hole 100. In this manner, the cables extending between the wall boxes are protected. The cables are also hidden from view, and not easily accessible by someone wanting to tamper with or destroy the cables.

The cables can be preinstalled extending between the wall boxes, or they can be routed after the wall boxes 40 are mounted, such as when a new wall box is added. Prior to the new box being added, the extra cables can be stored in one of the wall boxes preexisting on wall plate 10. Riser cables can also enter wall boxes 40 from one or more ducts 30 and rear holes 100.

Wall boxes 40 include top and bottom removable cover portions 112. Such removable portions allow for cables to extend between the wall boxes 40, such as for jumper cables extending between termination panels 78 of different wall boxes 40. Alternatively, wall boxes 40 can be provided with preexisting holes to allow passage of cables between different wall boxes.

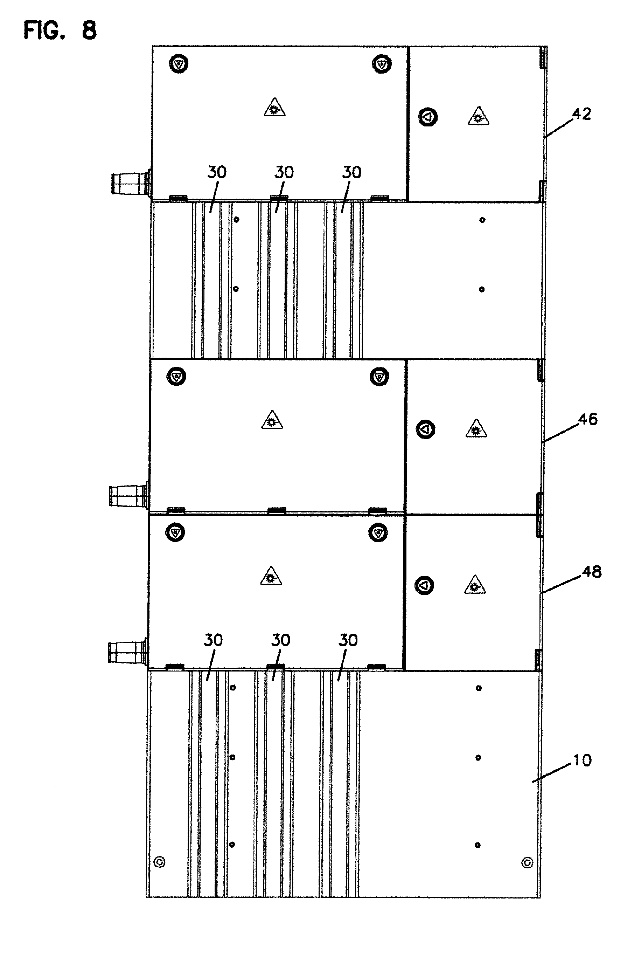

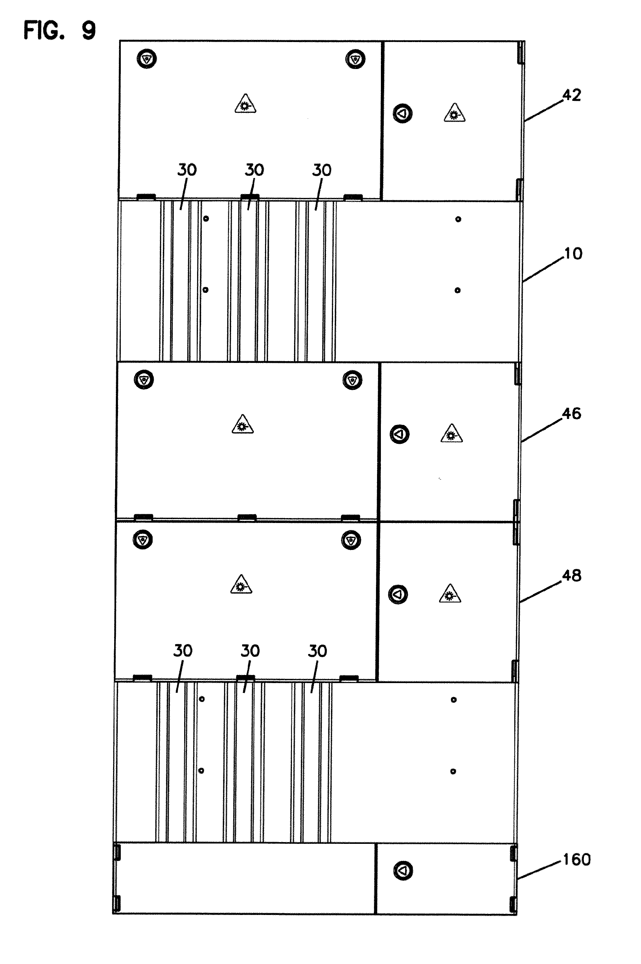

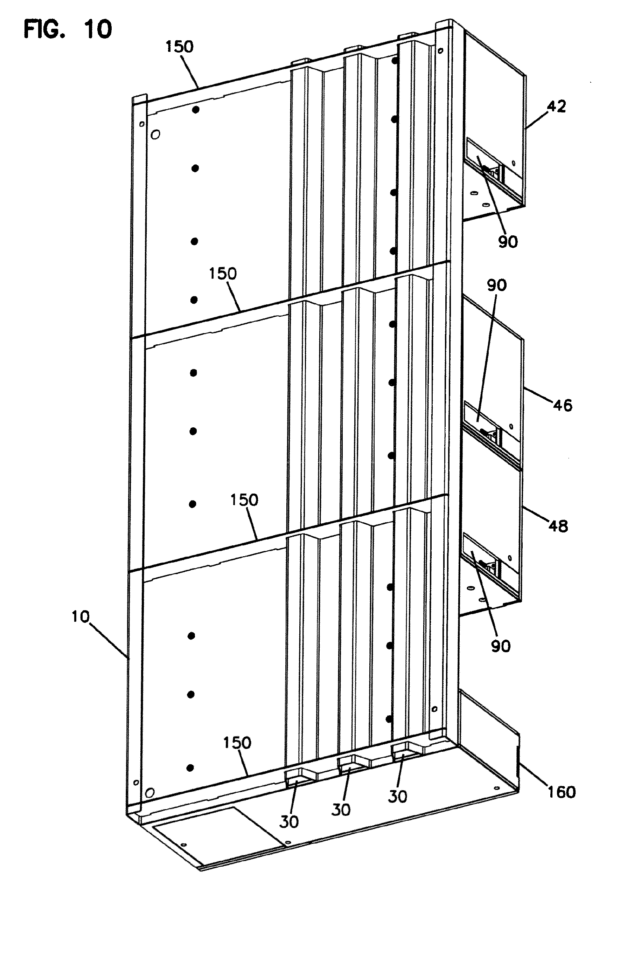

FIGS. 8 and 9 show wall plate 10 with second wall box 44 removed. In FIGS. 9 and 10, a jumper storage box 160 is shown. In FIG. 9, rear reinforcing plates 150 for wall plate 10 are shown extending transversely to ducts 30.

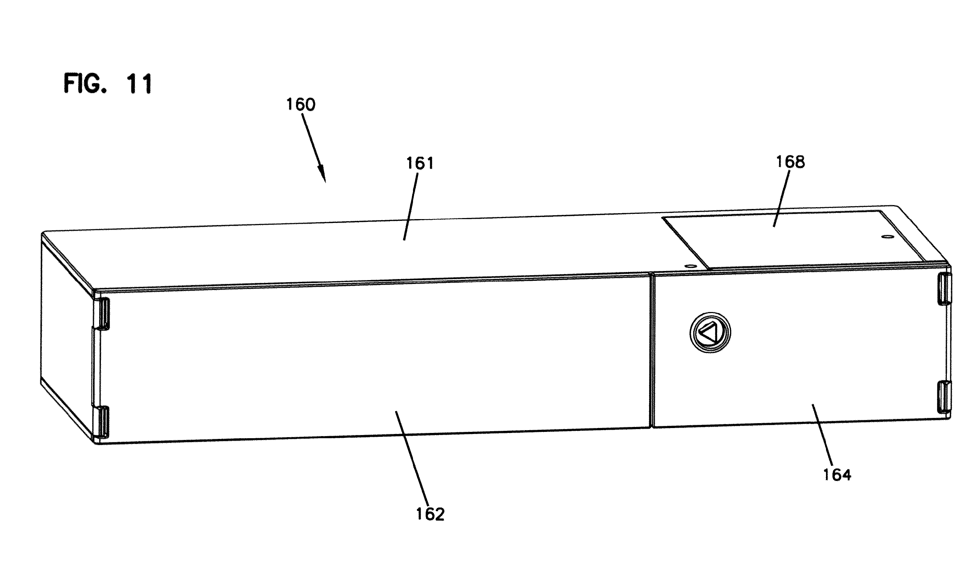

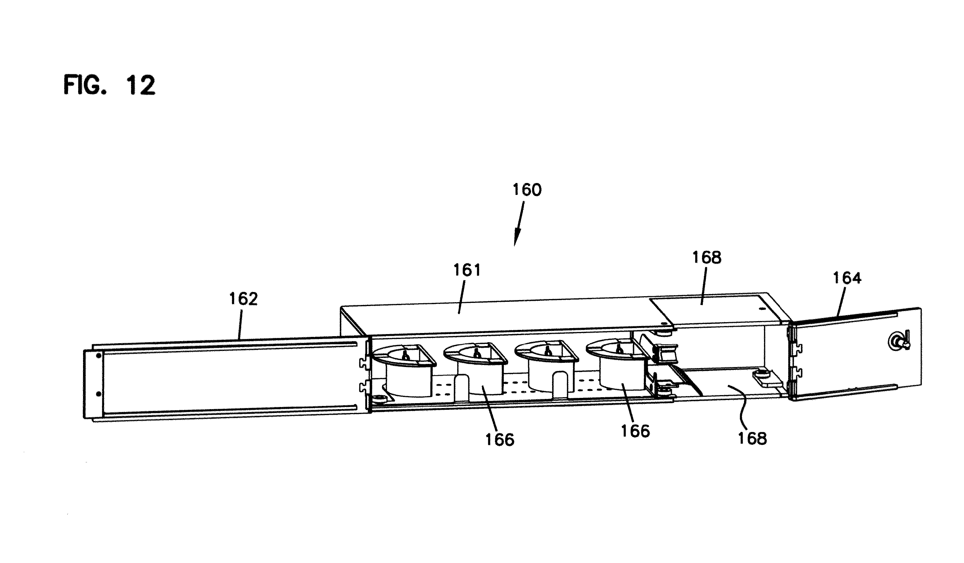

As shown in FIGS. 11 and 12, jumper storage box 160 includes a chassis 161 with a first front door 162, and second front door 164. Both front doors 162, 164 are hingedly attached to open and close to expose the interior. Top and bottom plates 168 can be removed if desired, or holes can be provided, to allow communication between jumper storage box 160 and the wall boxes 40. Disposed within jumper storage box 160 are a plurality of radius limiters 166 for cable slack storage. Jumper storage box 160 is useful for storing excess lengths of cross-connect cables extending between different wall boxes 40 in order to cross-connect the desired wall boxes 40 together.

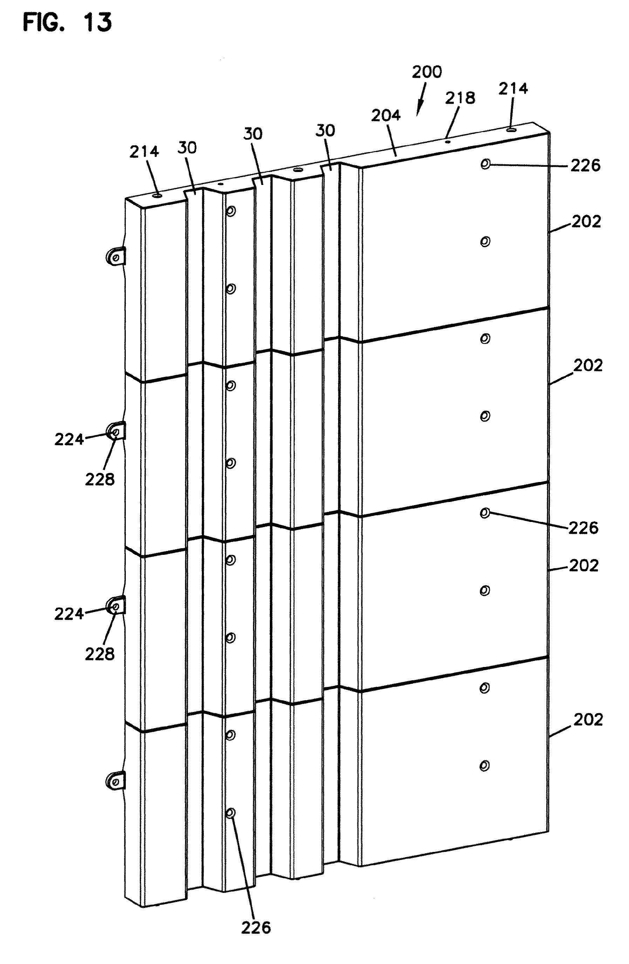

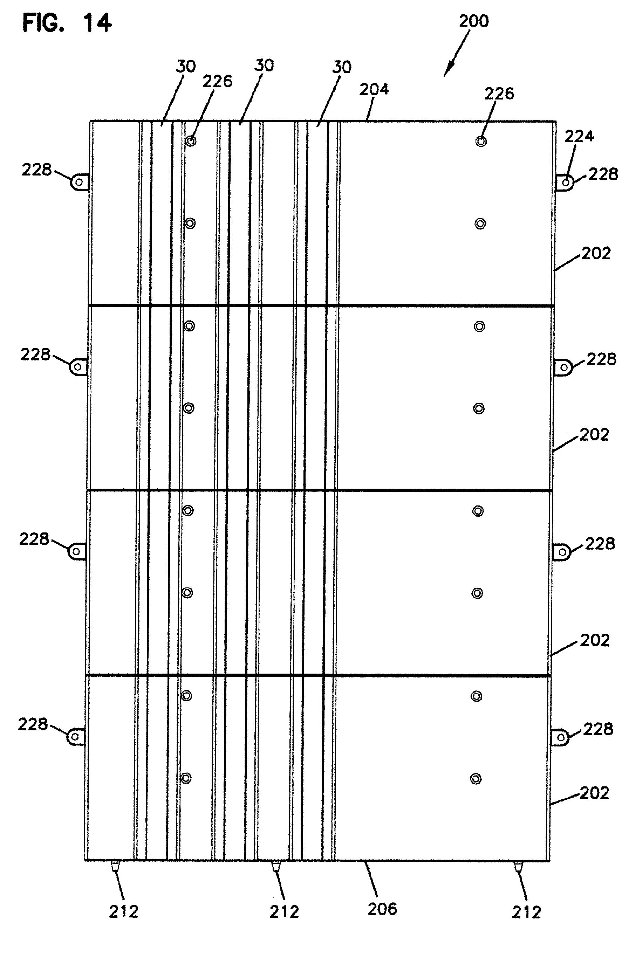

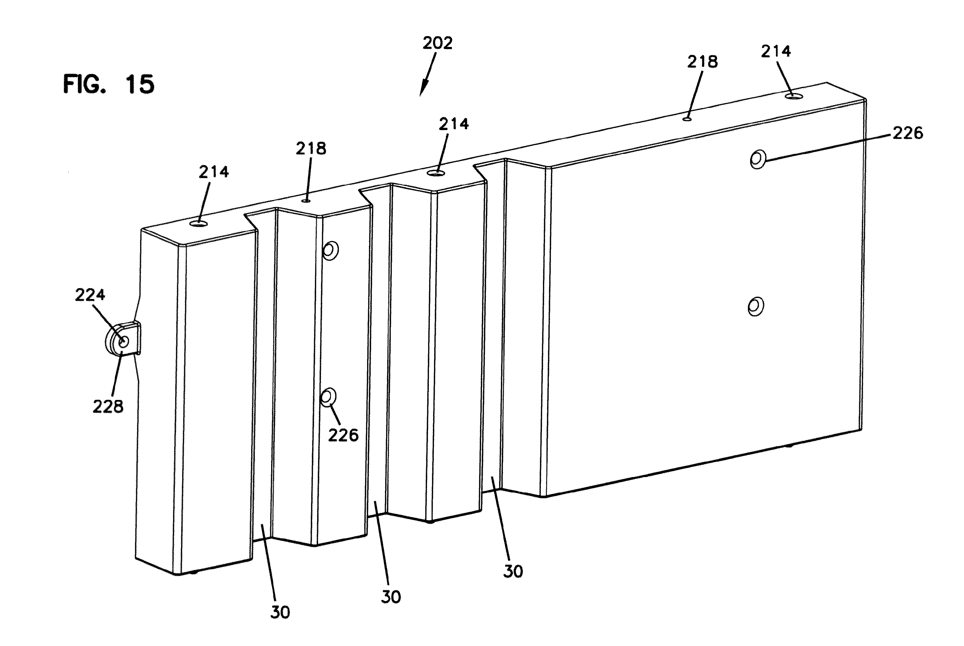

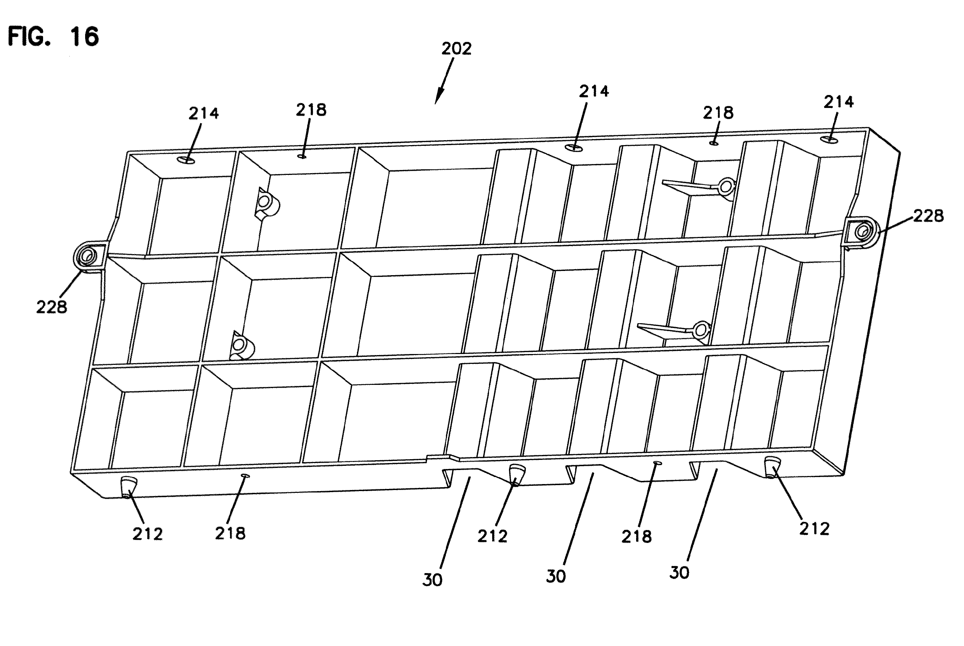

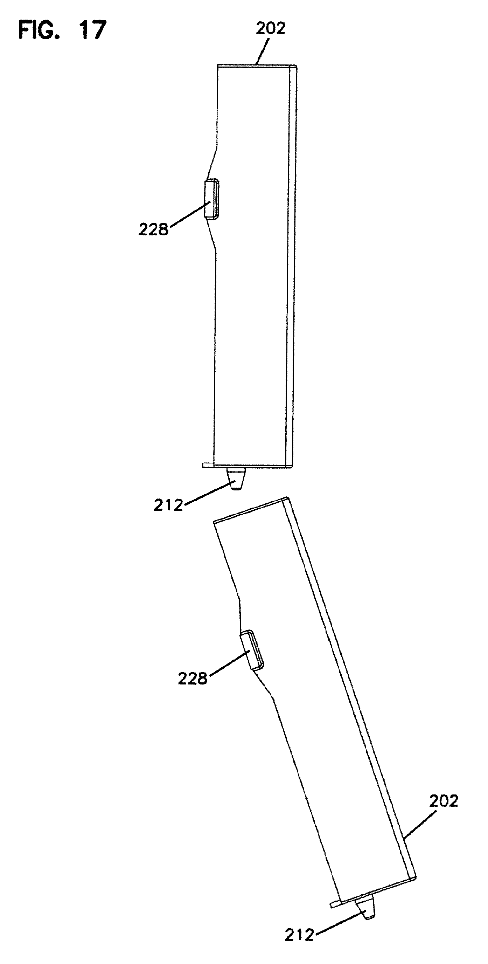

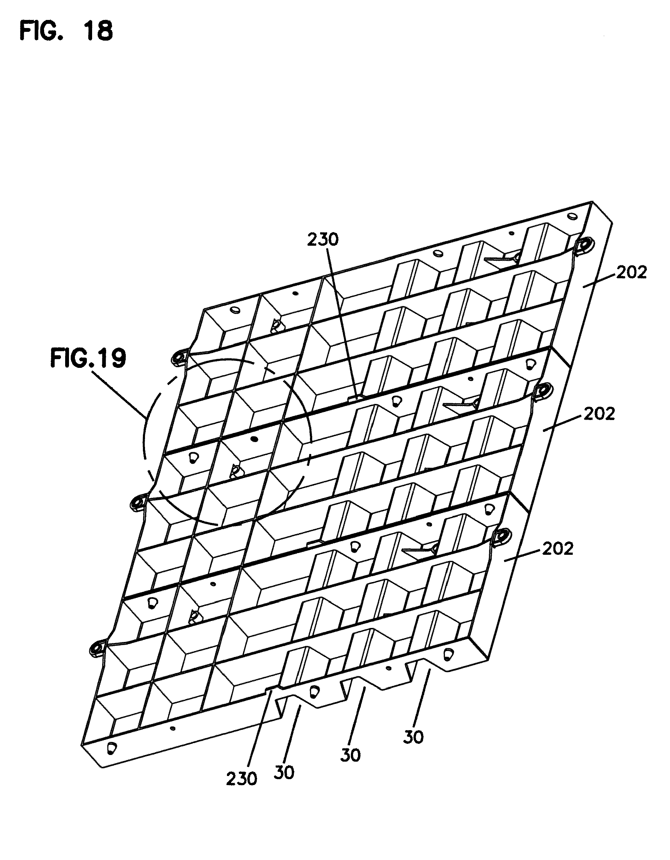

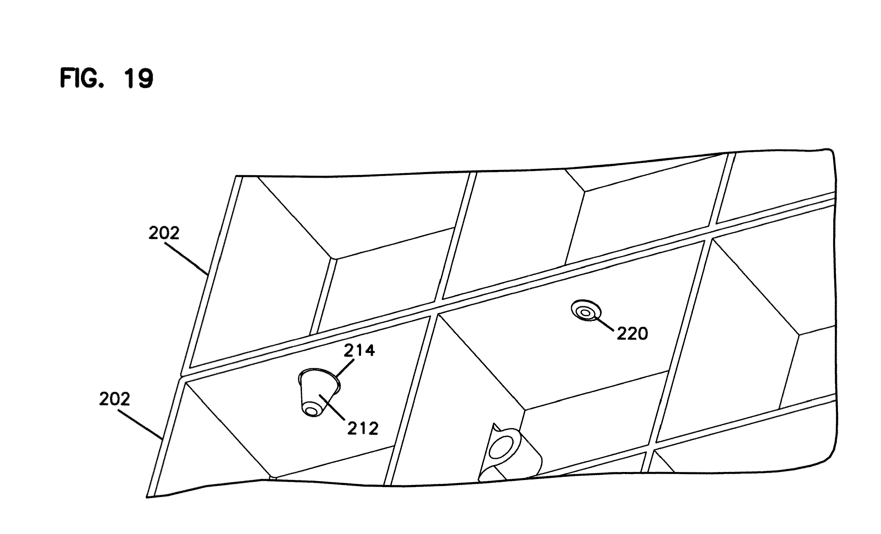

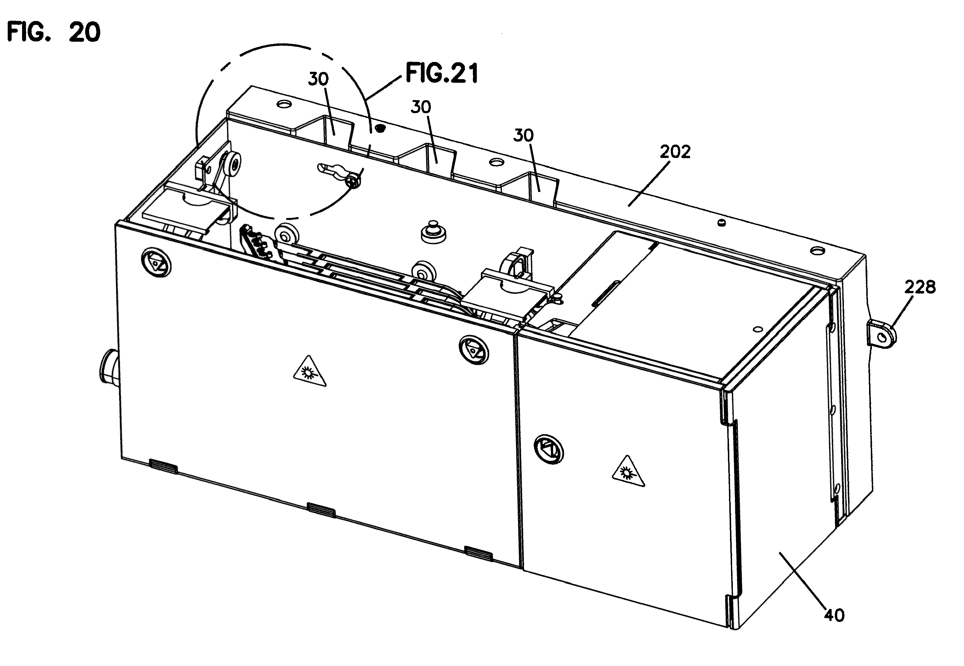

Referring now to FIGS. 13-19, an alternative wall plate 200 is constructed from smaller separate wall plate elements 202 which can be mounted together initially, or subsequently, as the need arises. The wall plates interlock to one another. In one example, there is a guide pin 212 and opening 214 interface. A locking pin 220 can be added through holes 218 to secure the separate plates together. Side ears or flanges with 228 mounting holes 224 can be used to mount each plate 202 to the wall. Once mounted to the wall and to each other, each duct 30 is in vertical alignment. As shown in FIG. 20, a wall box 40 can be pre-mounted to a wall plate 202. Such arrangement can be mounted to the wall as an initial wall box, or as secondary wall box mounted adjacent to a preexisting wall box and plate. Wall plate 202 can be made of molded plastic or other material. Flanges 228 and tabs 230 define the rear-most surface of wall plate 202. wall box 40 is the same height as wall plate 202. As shown wall box 40 is the same width as wall plate 202.

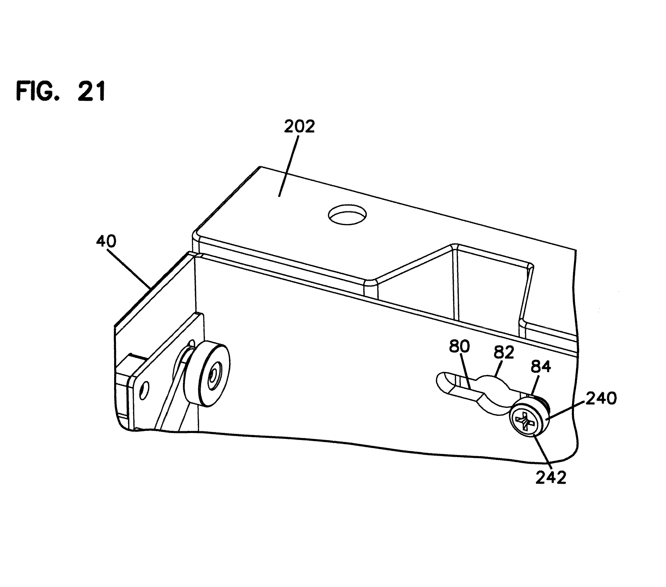

FIG. 21 shows mounting hole 80 for receipt of a fastener 240 pre-mounted to the wall plate. Once the wall box is positioned over the fastener head 242 through wide opening area 82 the wall box 40 is slid horizontally to the narrow opening area 84. and the fastener 240 is tightened to secure the wall box 40 to the wall plate 202.

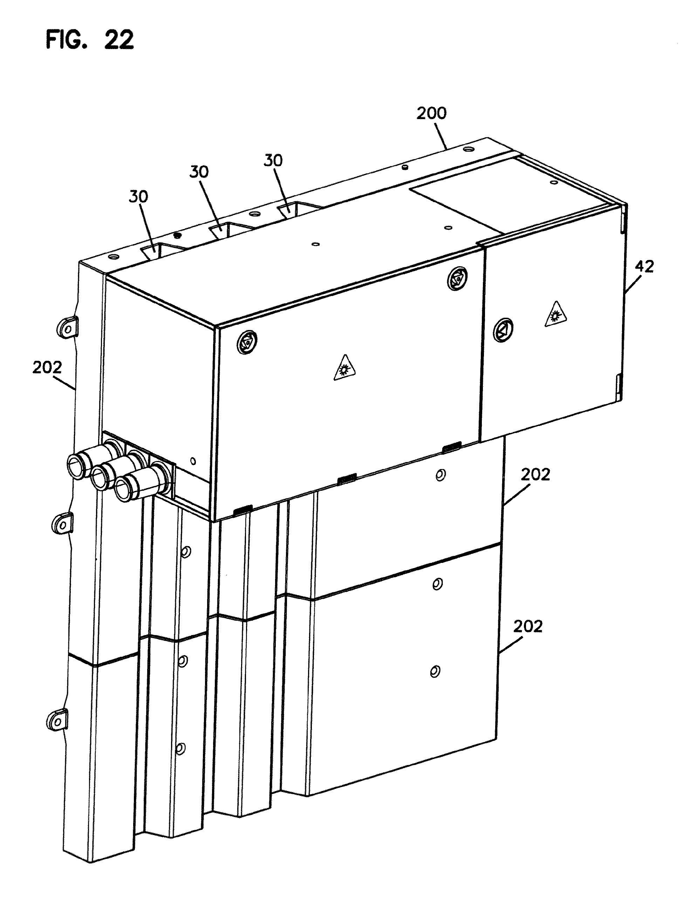

Referring now to FIG. 22 first wall box 42 is shown mounted to an upper wall plate 202. Additional wall plates 202 are mounted below with the ducts 30 in a vertical alignment.

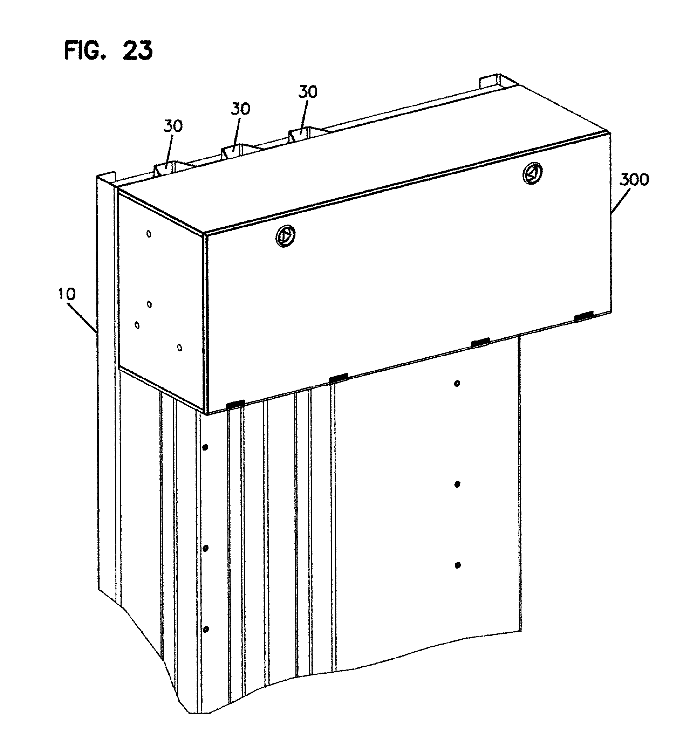

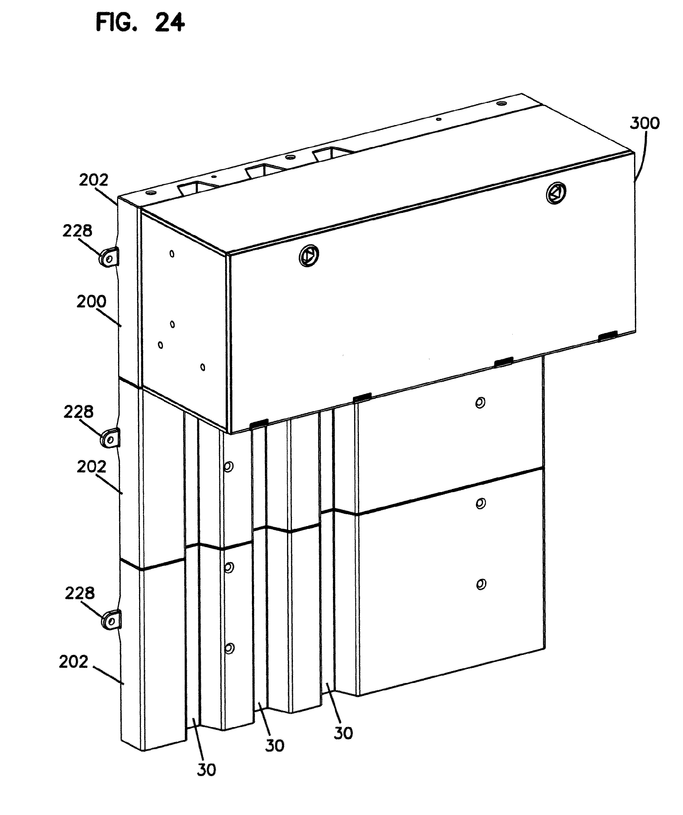

Referring now to FIGS. 23 and 24 a storage box 300 is shown for use on the previously disclosed wall plates. Storage box 300 can be used to hold cables prior to use with a disclosed wall box 40. Fiber trays including a connector storage feature can he included to manage the cables. Storage box 300 is the same height as wall plate 202.

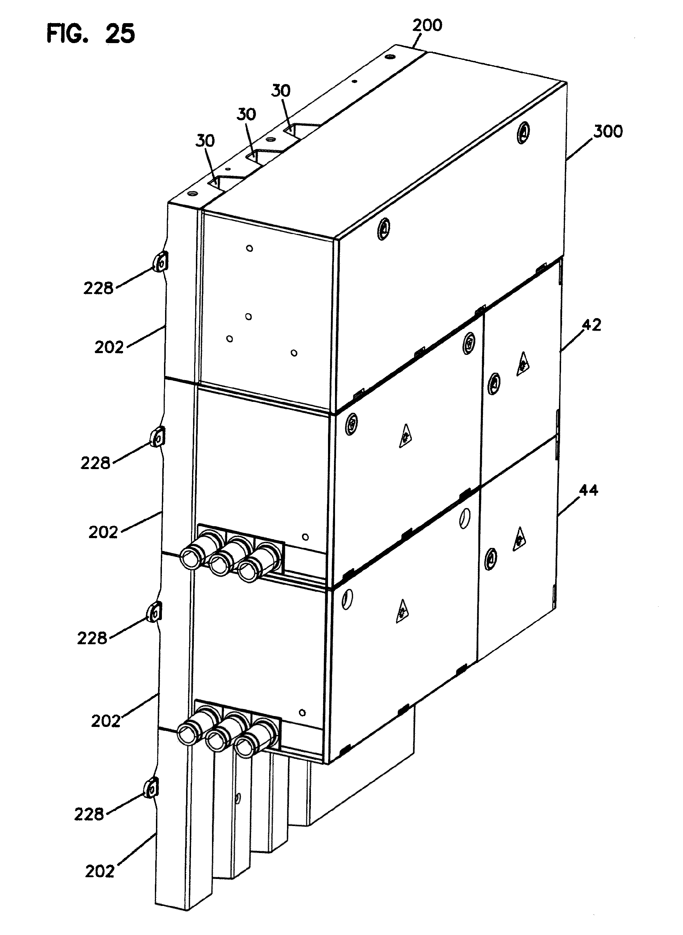

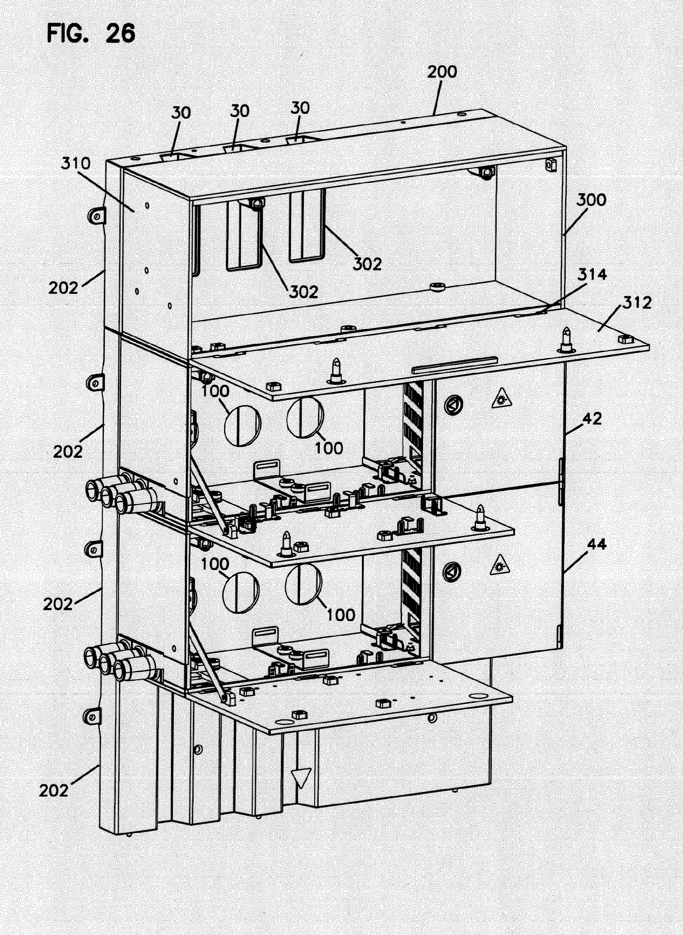

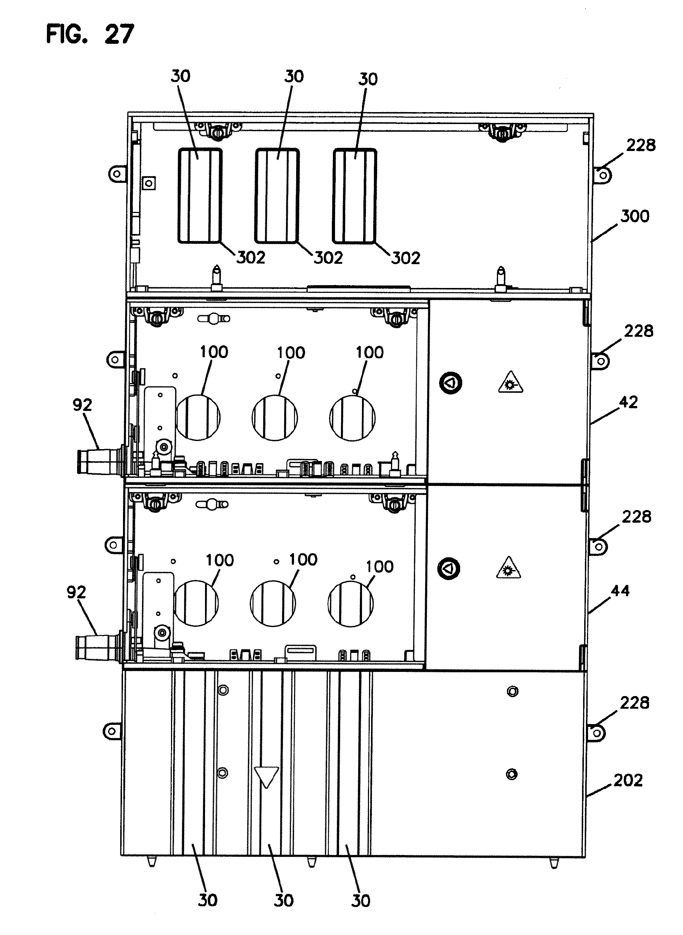

As shown in FIGS. 25-27, storage box 300 is mounted to upper plate 202, and two wall boxes 42, 44 are mounted vertically below storage box 300. Storage box 300 can be used to store fibers for wall boxes that are not yet installed. The extra fibers can be fibers for premises not yet occupied. The extra fibers can also be redundant fibers for each premises, such as one fiber for each operator who may provide service to the building.

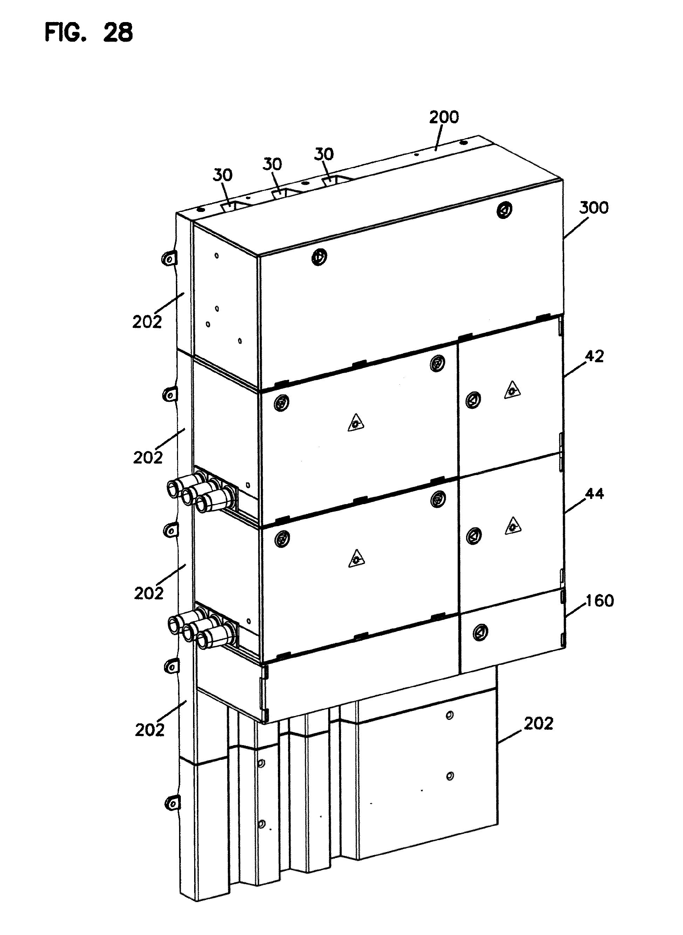

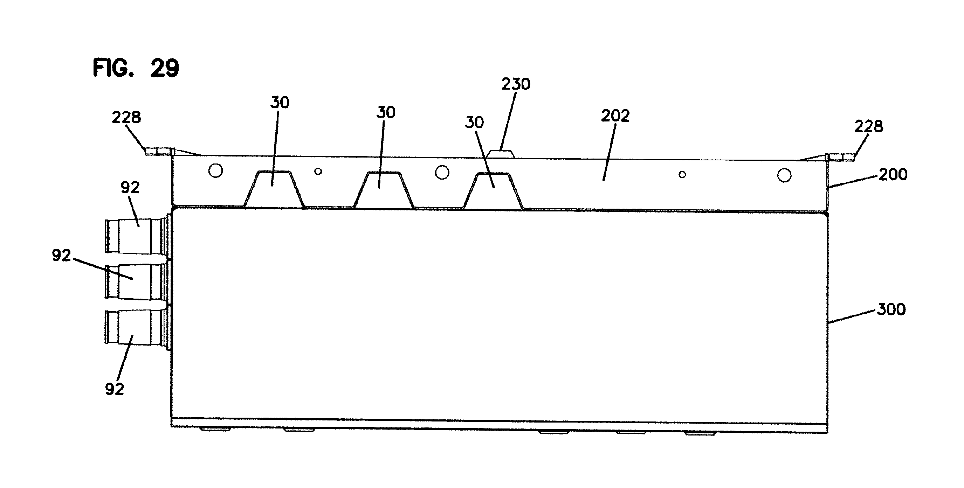

Referring now to FIG. 28, a similar arrangement to the arrangement of FIGS. 25-27 is shown and includes a jumper storage box 160 for use in cross-connecting boxes 42 and 44. FIG. 29 shows a top view of the system of FIG. 28 including the ducts 30 extending from top to bottom.

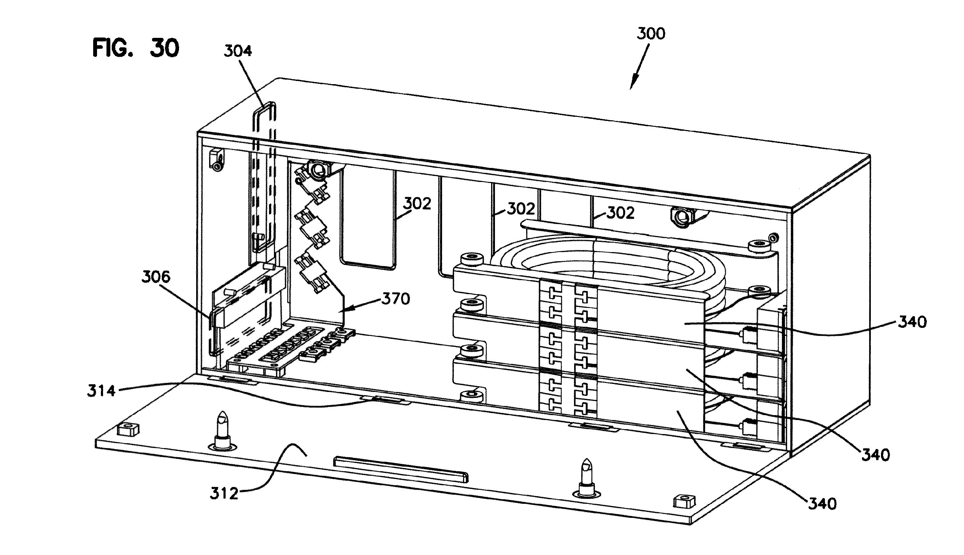

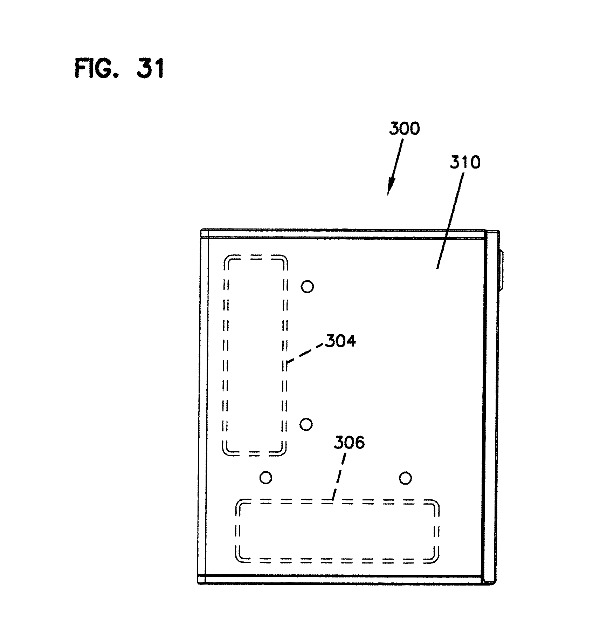

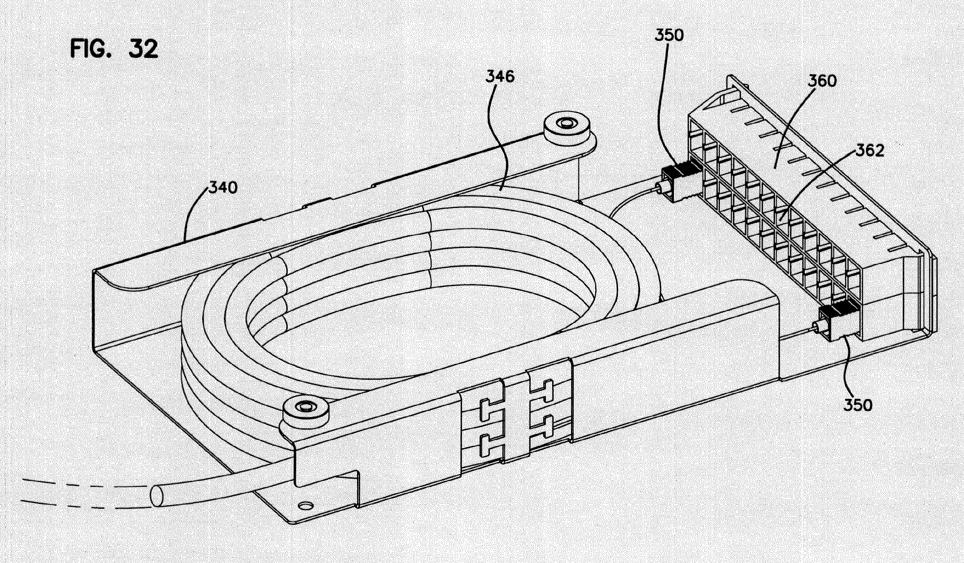

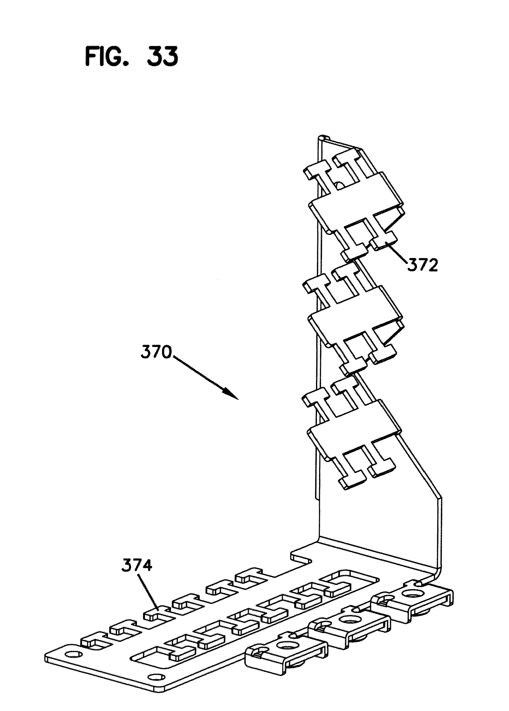

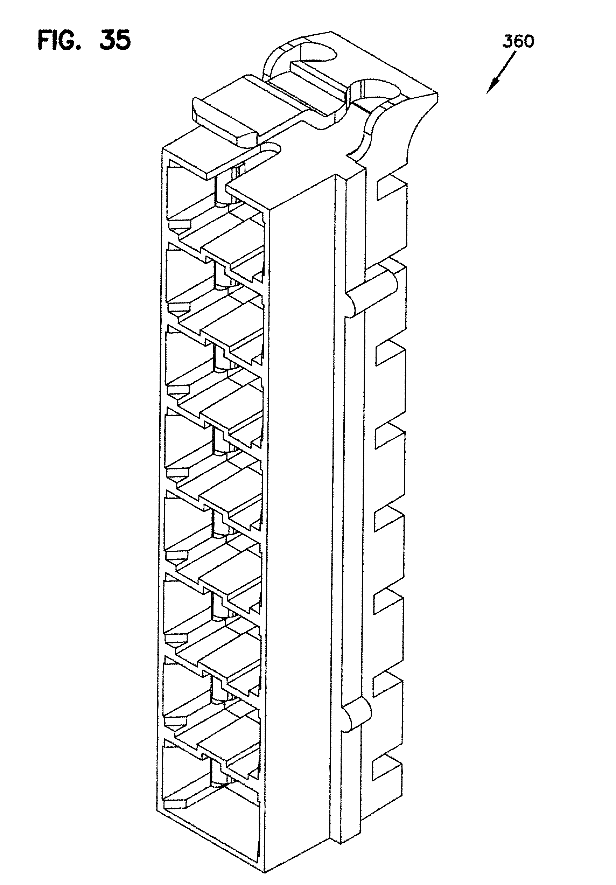

Referring now to FIGS. 30-33, storage box 300 includes rear openings 302 in chassis 310. Additional side openings 304, 306 can be provided. Multiple openings 304 and/or 306 can be provided if desired. Front cover 312 pivots open with a horizontal hinge 314. Disposed within storage box 300 are fiber storage trays 340 for storing lengths of cable 346. Cable 346 is terminated with connectors 350. Connectors 350 are stored in a connector storage device 360 including connector storage ports 362. Connector storage ports 362 allow for storage of connectors 350, such as SC type, which include dust caps over the ends of the ferrules. An example connector storage device 360 is shown in FIG. 35. US Patent No. 7,218,827, the disclosure of which is incorporated by reference, also shows an example connector storage device 360. FIG. 33 shows a cable tie device 370 including cable tie off portions 372, 374. Rear openings 302, and side openings 304, 306 can be in the form of knockouts.

In the illustrated embodiments, boxes 40, 160, 300 are the same width as wall plates 10, 200 in the horizontal directions.

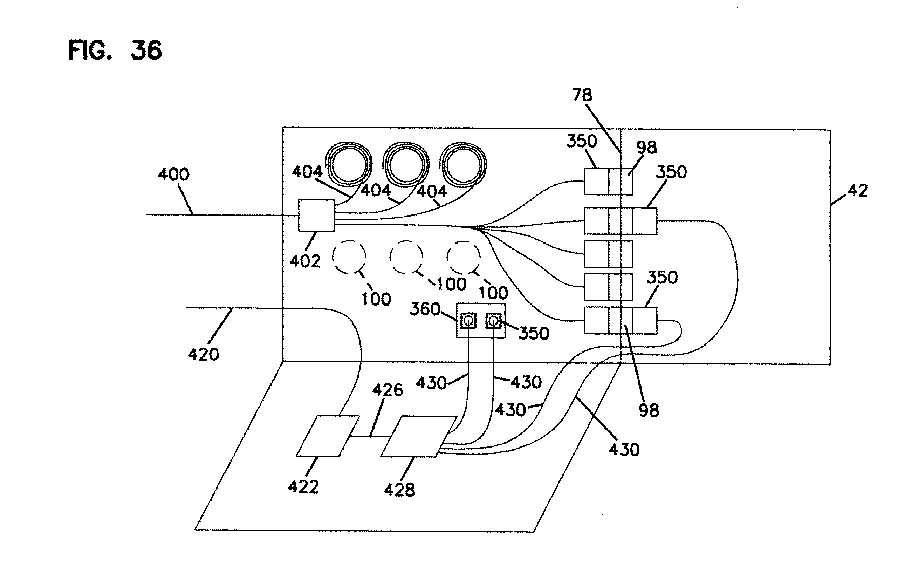

FIG. 36 shows a schematic representation of a wall box 40 with cables connected in an interconnect arrangement. The wall plate is present but not shown in the illustrated view. A riser cable 400 is fanned out at fan out 402 into single fibers or groups of fibers 404. A feeder cable 420 is spliced at splice 422 to a splitter input 426 for a splitter 428. Splitter outputs 430 and riser cables 404 are connectorized with fiber connectors 350, such as SC type connectors. Some splitter outputs 430 are stored at connector storage device 360. Adapters 98 at termination panel 78 connect selected riser cables 404 to feeder cables from splitter 428.

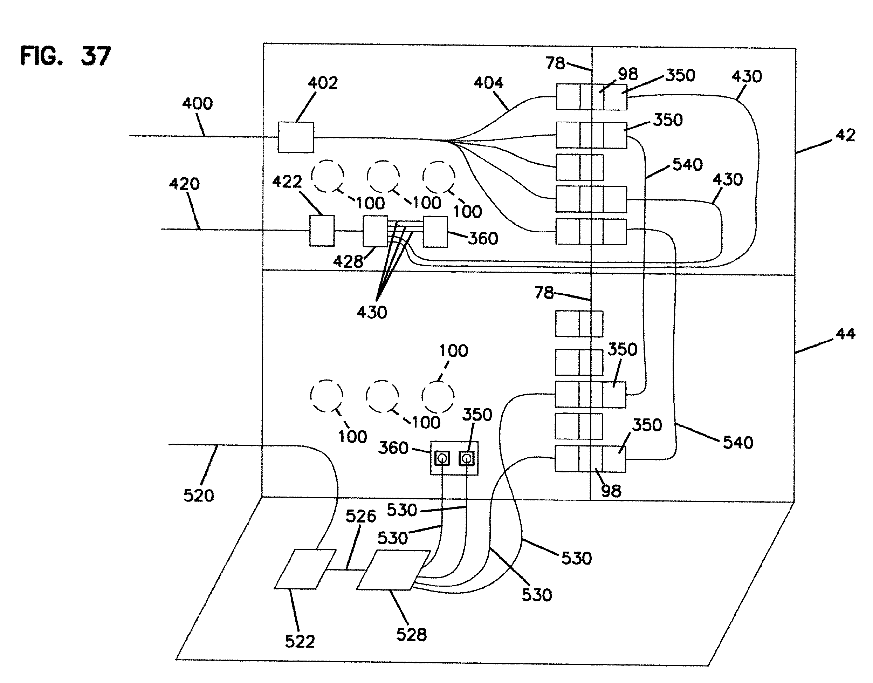

FIG. 37 shows a schematic representation of two wall boxes 42, 44 with cables connected in a cross-connect arrangement. The wall plate is present but not shown in the illustrated view. The feeder cable 420 and some splitter outputs 430 of wall box 42 are not used. Two splitter outputs 430 are used to interconnect to riser cables 404. Also, a second feeder cable 520 is spliced at splice 522 to a splitter input 526 for a splitter 528. Splitter outputs 530 are connectorized with fiber connectors 436, such as SC type connectors. Some splitter outputs 530 are stored at connector storage device 360. Adapters 98 at termination panels 78 connect selected riser cables 404 to splitter outputs 530 from splitter 528 with jumper cables 540 in a cross-connect arrangement.

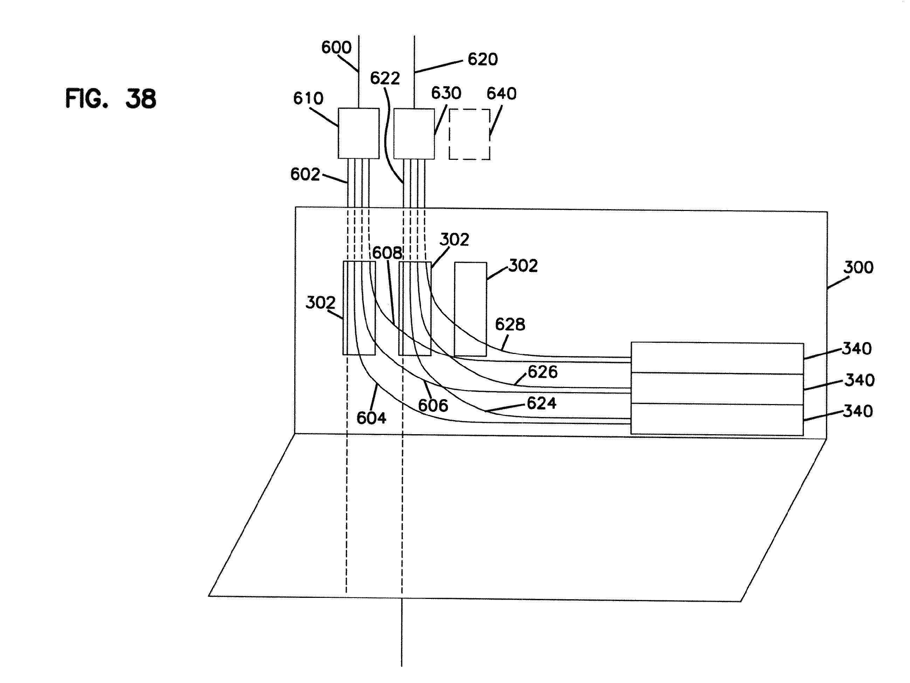

FIG. 38 shows a schematic representation of the storage box 300 with three riser cables 604, 606, 608 of main riser cable 600 being stored within the storage box. The wall plate is present but not shown in the illustrated view. Riser cable 602 of main riser cable 600 passes behind storage box 300 in a duct, such as to a wall box 42. Fanout 610 resides outside of storage box 300. Fanout 610 can be mounted to the wall plate 10, 200, 202, such during factory installation.

FIG. 38 shows a second main riser cable 620 with a fanout 630 fanning the cable out into riser cables 622, 624, 626, 628. Riser cable 622 passes behind storage box 300 in a duct. The remaining riser cables 624, 626, 628 are stored in fiber storage trays 340. Riser cables 602, 622 can be pre-connected to termination panels 78 in wall boxes 40 mounted to a wall plate 10, 200, 202, such as at the factory. The cables 602, 622 can be connected in the field as each wall box is added.

A third fanout 640 is shown for an additional riser cable, if desired. As shown each opening 302 is used with a different riser cable 600, 620 in the illustrated embodiment.

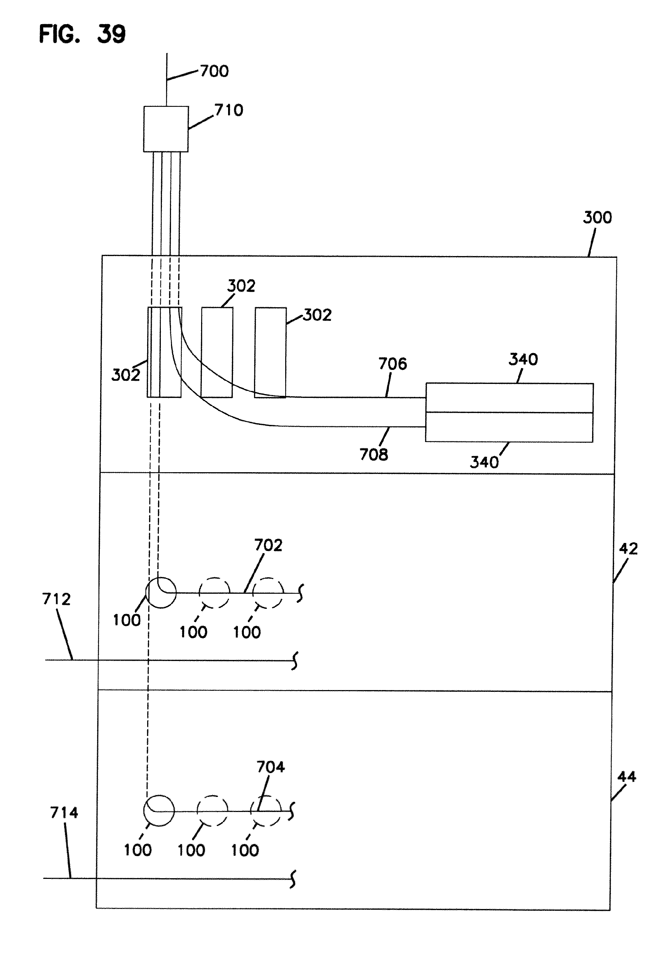

FIG. 39 shows a schematic representation of the cabling in an example arrangement with one storage box 300, and two wall boxes 42, 44. The wall plate is present but not shown in the illustrated view. Main riser cable 700 goes to a fanout 710. First riser cable 702 can be interconnected with first feeder cable 712, as noted above. Second riser cable 704 can be interconnected with second feed cable 714, as noted above. Wall boxes 42, 44 can be cross-connected with each other, or with other wall boxes as desired. Third and fourth riser cables 706, 708 can be stored for later use in storage box 300. All of the riser cables 702, 704, 706, 708 are in the same duct of the wall plate.

In one arrangement, a wall plate 10, 200 includes an upper cable storage box 300, a first wall box 42 where a first operator can interconnect its feeder cable to the riser cable.

A second wall box 44 is provided where a second operator can cross-connect its feeder cable to the riser cable with jumper cables. A jumper storage box 160 can be added as desired. The second operator can also connect to a second riser cable stored in the cable storage box and passed to second wall box 44 in one of the ducts.

In another arrangement, a wall plate 10, 200 includes an upper wall box 42 where the first operator interconnects the riser cable to its feeder cable. A second wall box 44 can cross-connect its feeder cable to the riser cable with jumper cables. A jumper storage box can be added as desired.

In either of the above arrangements, the splices and splitters can be pre-installed in wall boxes 42, 44. Wall box 44 can be initially installed on wall plate 10, 200, or added later. The riser cable can be pre-installed to wall boxes 42, 44, or added later. More wall boxes 46, 48 can be pre-assembled to wall plate 10, 200, or added later.

The above systems and methods provide flexibility for customers who initially order an assembled system or who want to add operators and additional feeder cables. With such a flexible and modular system, other configurations different from the above described configurations are possible.

**Parts List**
- 10: Wall plate
- 12: First side
- 14: Second side
- 16: Top
- 18: Bottom
- 20: Front surface
- 22: Rear surface
- 24: Wall mounting holes
- 26: Equipment mounting holes
- 30: Ducts
- 40: Wall box
- 42: First wall box
- 44: Second wall box
- 46: Third wall box
- 40: Fourth wall box
- 50: Area
- 52: Chassis
- 54: Top
- 56: Bottom
- 58: First side
- 60: Second side
- 62: Front
- 64: Interior
- 66: First cover
- 68: Bottom hinge
- 70: Rear
- 72: Side cover
- 74: Side hinge
- 78: Termination panel
- 80: Mounting holes on wall box

- 82: Wide opening area
- 84: Narrow opening area
- 88: Adapter mounting holes
- 90: Side opening
- 92: Side ports
- 98: Adapter
- 100: Rear holes
- 112: Top/bottom removable cover portions
- 150: Reinforcing plates
- 160: Jumper storage box
- 161: Chassis
- 162: First front door
- 164: Second front door
- 166: Radius limiters
- 168: Top/bottom plates
- 200: Wall plate
- 202: Smaller wall plates
- 204: Top surface
- 206: Bottom surface
- 212: Guide pin
- 214: Opening
- 218: Locking pin holes
- 220: Locking pin
- 224: Mounting holes
- 228: Flanges
- 240: Fastener
- 242: Head
- 300: Cable storage box
- 302: Rear openings
- 304: Additional side openings
- 306: Additional side openings

- 310: Chassis
- 312: Front cover
- 314: Hinge
- 340: Fiber storage trays
- 346: Cable
- 350: Connectors
- 360: Connector storage device
- 362: Connector storage ports
- 370: Cable tie device
- 372: Cable tie off portion
- 374: Cable tie off portion
- 400: Riser cable
- 404: Riser cables
- 420: Feeder cable
- 422: Splice
- 426: Splitter input
- 428: Splitter
- 430: Splitter outputs
- 436: Fiber connectors
- 520: Second feeder cable
- 522: Splice
- 526: Splitter input
- 528: Splitter
- 530: Splitter outputs
- 540: Jumper cables
- 600: Main riser cable
- 602: Riser cable
- 604: Riser cable
- 606: Riser cable
- 608: Riser cable
- 610: Fanout

- 620: Second main riser cable
- 622: Riser cable
- 624: Riser cable
- 626: Riser cable
- 628: Riser cable
- 630: Fanout
- 640: Fanout
- 700: Main riser cable
- 702: First riser cable
- 704: Second riser cable
- 706: Third riser cable
- 708: Fourth riser cable
- 710: Fanout
- 712: First feeder cable
- 714: Second feeder cable

## Claims

1. A telecommunications wall plate for mounting to the wall surface comprising:
a body defining a front surface (20), and a rear surface (22);
**characterized in that**:
the body including two opposite sides (12, 14), a top (16), and a bottom (18);
the front surface (20) is spaced from the rear surface (22);
the front surface (20) defines at least one duct (30) extending in a longitudinal direction from the top (16) to the bottom (18) and exposed along the front surface in the space between the front surface and the rear surface.

2. The telecommunications wall plate of claim 1, further comprising a plurality of parallel ducts.

3. The telecommunications wall plate of claim 2, wherein three ducts are provided.

4. The telecommunications wall plate of claims 1-3, further comprising equipment mounting holes (26) for mounting telecommunications equipment boxes (40, 160, 300) to the wall plate.

5. The telecommunications wall plate of claims 1-4, further comprising wall mounting holes (24, 224) for mounting the wall plate to the wall.

6. The telecommunications wall plate of claim 5, wherein the wall mounting holes are disposed on flanges (228) extending from the opposite sides of the body.

7. The telecommunications wall plate of claims 1-6, wherein the wall plate is longer in the longitudinal direction than any equipment box mounted on the wall plate.

8. The telecommunications wall plate of claims 1-6, wherein the wall plate is the same length in the longitudinal direction as the equipment box mounted thereon.

9. The telecommunications wall plate of claim 8, wherein the wall plate includes a top surface (204), and a bottom surface (206), wherein at least one of the top and bottom surfaces includes interlocking elements for mating with a second wall plate, wherein at least one duct of each wall plate is in alignment.

10. The telecommunications wall plate of claims 1-9, further comprising a wall box (40) mounted to the front surface of the wall plate.

11. The telecommunications wall plate of claim 1-10, further comprising a plurality of wall boxes (40) mounted to the front surface of the wall plate.

12. The telecommunications wall plate of claims 10 and 11, further comprising one or more rear holes (100) on the wall box for cables, the rear holes in alignment with at least one duct.

13. The telecommunications wall plate of claims 1-12, further comprising a cable storage box (300) mounted to the wall plate.

14. The telecommunications wall plate of claims 1-13, further comprising a jumper storage box (160) mounted to the wall plate.

15. A method of using the wall plate of claims 1-14, further comprising:
mounting a wall box to the wall plate, wherein a rear hole (100) of the wall box aligns with the duct (30);
routing a riser cable to the wall box;
mounting the wall plate with the mounted wall box and the riser cable to a wall.
